# EUROPÄISCHE PATENTSCHRIFT

(11) **EP 4 446 043 B1**
(45) Veröffentlichungstag und Bekanntmachung des Hinweises auf die Patenterteilung: **11.06.2025**
(21) Anmeldenummer: 23167415.1
(22) Anmeldetag: 11.04.2023
(51) Int. Cl.: B23F 5/16, B23F 21/10

(54) **WÄLZSCHÄLWERKZEUG UND VERFAHREN ZUM BEARBEITEN VON ZAHNFLANKEN EINER VERZAHNUNG**
SKIVING TOOL AND METHOD FOR MACHINING TOOTH FLANKS OF A TOOTHING BY SKIVING
OUTIL DE TAILLAGE PAR DÉVELOPPANTE ET PROCÉDÉ D'USINAGE DE FLANCS DE DENTS D'UNE DENTURE

(43) Veröffentlichungstag der Anmeldung: 16.10.2024
(73) Patentinhaber: Reishauer AG, 8304 Wallisellen (CH)
(72) Erfinder: MARX, Hartmut, 8304 Wallisellen (CH); LEONHARDT, Christoph, 8304 Wallisellen (CH); ZIMMER, Maximilian, 8304 Wallisellen (CH)
(74) Vertreter: Kohler Schmid Möbus Patentanwälte

(56) Entgegenhaltungen:
- EP-B1- 3 528 989
- WO-A1-2016/191509
- WO-A1-2018/177563
- DE-T5- 112021 001 880
- US-B2- 9 878 383

## Beschreibung

### Hintergrund der Erfindung

Die Erfindung betrifft ein Wälzschälwerkzeug zum Bearbeiten von Zahnflanken einer Verzahnung eines Werkstücks, indem das Wälzschälwerkzeug um eine Werkzeugachse gedreht wird und das Werkstück um eine windschief zu der Werkzeugachse verlaufende Werkstückachse gedreht wird, wobei das Wälzschälwerkzeug und das Werkstück mit einer Vorschubbewegung mit einer Komponente entlang der Werkstückachse relativ zueinander verschoben werden, wobei das Wälzschälwerkzeug mehrere Schneidkanten aufweist, die beim Bearbeiten des Werkstücks nacheinander an derselben Zahnflanke Material abtragen. Die Erfindung betrifft ferner ein Verfahren zum Bearbeiten von Zahnflanken einer Verzahnung eines Werkstücks durch Wälzschälen, indem ein Wälzschälwerkzeug in Eingriff mit der Verzahnung gebracht wird, wobei das Wälzschälwerkzeug um eine Werkzeugachse gedreht wird und das Werkstück um eine windschief zu der Werkzeugachse verlaufende Werkstückachse gedreht wird, und wobei das Wälzschälwerkzeug und das Werkstück mit einer Vorschubbewegung mit einer Komponente entlang der Werkstückachse relativ zueinander verschoben werden.

Solche Wälzschälwerkzeuge und Wälzschälverfahren sind grundsätzlich bekannt, beispielsweise aus EP 3 528 989 B1 oder aus EP 2 537 616 A1.

Zum Herstellen von Verzahnungen sind verschiedene Verfahren bekannt. Als spanende Verfahren seien beispielsweise Wälzfräsen, Hobeln, Stoßen oder Wälzschleifen genannt. Das sogenannte Wälzschälen ist ein kontinuierliches spanabhebendes Verfahren zur Bearbeitung von Verzahnungen. Wichtige Grundlagen und Begriffe des Wälzschälens sind beispielsweise in EP 3 528 989 B1 erläutert. Das Wälzschälen ermöglicht die präzise Herstellung von Außenverzahnungen wie auch Innenverzahnungen.

Beim Wälzschälen wird ein Wälzschälwerkzeug um eine Werkzeugachse gedreht und ein Werkstück wird um eine windschief zu der Werkzeugachse verlaufende Werkstückachse gedreht. Gleichzeitig erfolgt eine Vorschubbewegung, die typischerweise entlang der Werkstückachse erfolgt. Das Wälzschälwerkzeug weist mehrere Schneidkanten auf. Eine Spanfläche ist typischerweise an einer Stirnseite des Wälzschälwerkzeugs eingerichtet; eine Freifläche erstreckt sich in der Regel in axialer Richtung oder unter einem Schrägungswinkel zur Werkstückachse.

Beim Wälzschälen werden aufgrund der diskreten Schneidkanteneingriffe Bearbeitungsspuren, sogenannte Vorschubmarkierungen, erzeugt. Bei den bekannten Verfahren weisen diese Vorschubmarkierungen jeweils gleiche Abstände auf. Beim Abrollen der Verzahnung mit einer Gegenverzahnung können die äquidistanten Vorschubmarkierungen zu einer gleichförmigen Anregung führen. Dies ist im Hinblick auf die Geräuschentwicklung nachteilig.

Aus DE 11 2017 000 162 T5 ist es bekannt, dass Schneidkanten an einem Wälzschälwerkzeug in unterschiedlichen axialen Höhen angeordnet sein können, sodass sie gemeinsam einen Schneidkantenabschnitt zur Bearbeitung einer Flanke der Verzahnung des Werkstücks bilden. Zunächst kommt eine erste Grobschneidkante, sodann eine zweite Grobschneidkante und schließlich eine Schlichtschneidkante mit dem Werkstück in Kontakt. Derart erfolgt in unmittelbarer Folge eine Grob- und Feinbearbeitung der Verzahnung des Werkstücks.

### Aufgabe der Erfindung

Es ist eine Aufgabe der Erfindung, das Wälzschälen von geräuschoptimierten Verzahnungen zu ermöglichen.

### Beschreibung der Erfindung

Diese Aufgabe wird erfindungsgemäß gelöst durch ein Wälzschälwerkzeug mit den in Anspruch 1 angegebenen Merkmalen und ein Verfahren gemäß Anspruch 15. In den jeweiligen Unteransprüchen und der Beschreibung sind vorteilhafte Ausführungsformen bzw. Varianten angegeben.

### Erfindungsgemäßes Wälzschälwerkzeug

Erfindungsgemäß ist ein Wälzschälwerkzeug zum Bearbeiten von Zahnflanken einer Verzahnung eines Werkstücks vorgesehen. Für das Bearbeiten der Zahnflanken wird das Wälzschälwerkzeug um eine Werkzeugachse gedreht und das Werkstück wird um eine windschief zu der Werkzeugachse verlaufende Werkstückachse gedreht, wobei das Wälzschälwerkzeug und das Werkstück mit einer Vorschubbewegung mit einer Komponente entlang der Werkstückachse relativ zueinander verschoben werden. Die Vorschubbewegung weist aufgrund der Achskinematik auch eine Komponente entlang der Werkzeugachse auf. Typischerweise erfolgt die Vorschubbewegung parallel zu der Werkstückachse.

Das Wälzschälwerkzeug weist mehrere Schneidkanten auf, die beim Bearbeiten des Werkstücks nacheinander an derselben Zahnflanke Material abtragen. Unter einer Schneidkante wird eine Kante des Wälzschälwerkzeugs verstanden, welche beim Bearbeiten schneidend Material von dem Werkstück, hier einer Zahnflanke von dessen Verzahnung, abträgt. Bei der Bearbeitung können alle Schneidkanten an jeder Zahnflanke angreifen oder es können nur einige der Schneidkanten an einer jeweiligen Zahnflanke angreifen.

Erfindungsgemäß ist vorgesehen, dass wenigstens zwei der Schneidkanten zur Bearbeitung derselben Zahnflanke in unterschiedlichen Höhen entlang der Werkzeugachse angeordnet sind, wobei für wenigstens einen radialen Abstand von der Werkzeugachse ein entlang der Werkzeugachse gemessener Abstand der entsprechenden Punkte auf den in unterschiedlichen axialen Höhen angeordneten Schneidkanten wenigstens 5 µm, insbesondere wenigstens 10 µm, und höchstens 0,5 mm, insbesondere höchstens 0,3 mm beträgt. Der axiale Abstand der verschobenen Schneidkanten kann bevorzugt wenigstens 20 µm, besonders bevorzugt wenigstens 30 µm, und/oder bevorzugt höchstens 0,2 mm, besonders bevorzugt höchstens 0,15 mm, betragen. Insbesondere können die jeweiligen Linienmittelpunkte der auf unterschiedlichen axialen Höhen angeordneten Schneidkanten entlang der Werkzeugachse um wenigstens 5 µm, bevorzugt wenigstens 10 µm, besonders bevorzugt wenigstens 20 µm, ganz besonders bevorzugt wenigstens 30 µm und/oder höchstens 0,5 mm, bevorzugt höchstens 0,3 mm, besonders bevorzugt höchstens 0,2 mm, ganz besonders bevorzugt höchstens 0,15 mm, zueinander verschoben sein.

Die axial verschobenen Schneidkanten dienen der Bearbeitung gleichnamiger (d. h. je linker oder rechter) Zahnflanken. Zum Bearbeiten der Zahnflanken des Werkstücks greifen die Schneidkanten des Wälzschälwerkzeugs in Zahnlücken der Verzahnung des Werkstücks ein.

Bei der Bearbeitung einer jeweiligen Zahnflanke greifen nacheinander mehrere Schneidkanten an dieser Zahnflanke an und tragen Material von ihr ab. Da wenigstens zwei der Schneidkanten in axialer Richtung der Werkzeugachse gegeneinander versetzt sind, erfolgt der Eingriff an der jeweiligen Zahnflanke nicht in gleichen, sondern in variierenden zeitlichen Abständen; ebenso erfolgt der Eingriff an der jeweiligen Zahnflanke nicht in gleichen, sondern in variierenden räumlichen Abständen, beispielsweise gemessen in Breitenrichtung der Zahnflanke.

Dies führt einerseits dazu, dass bei der Bearbeitung Eingriffsstöße sich nicht mit einer einzigen Frequenz wiederholen; vielmehr erfolgen die Eingriffsstöße mit einem breiteren Frequenzspektrum. Dies verringert bei der Bearbeitung auftretende Schwingungen und reduziert so Rückwirkungen aus dem Bearbeitungsprozess zwischen einer Wälzschälmaschine mit dem Wälzschälwerkzeug und Werkstück mit der Verzahnung. Insgesamt läuft der Bearbeitungsprozess ruhiger und stabiler.

Andererseits bewirkt die räumliche Variation der Schneidkanteneingriffe, dass sich die Abstände von über die Zahnflanke verlaufenden Vorschubmarkierungen bzw. Bearbeitungsspuren voneinander unterscheiden. Mit anderen Worten weist die Zahnflanke eine (unvermeidbare) Welligkeit auf, die nicht eine einzige Wellenlänge, sondern ein gewisses Wellenlängenspektrum besitzt. Beim Abrollen der Verzahnung auf einer Gegenverzahnung werden daher Anregungen mit einer einzigen Frequenz vermieden; stattdessen erfolgt eine breitbandige Rauschanregung. Dies resultiert in einem besseren, insbesondere ruhigeren Abrollverhalten. Insbesondere kann die Anregung von Resonanzfrequenzen vermieden werden. Insgesamt besitzt eine mit dem erfindungsgemäßen Wälzschälwerkzeug hergestellte Verzahnung im Hinblick auf NVH-Aspekte (Noise, Vibration, Harshness) optimierte Eigenschaften.

Auf unterschiedlichen axialen Höhen angeordnete Schneidkanten weisen grundsätzlich - ggf. von einzelnen Punkten bei gegeneinander geneigten Schneidkanten abgesehen - im selben Abstand von der Werkzeugachse unterschiedliche Positionen in Richtung der Werkzeugachse auf. Vorzugsweise weisen zwei auf unterschiedlichen axialen Höhen angeordnete Schneidkanten bei keinem Abstand von der Werkzeugachse dieselbe axiale Position entlang der Werkzeugachse auf.

Die in axialer Richtung versetzten Schneidkanten weisen im Allgemeinen nicht dieselbe Geometrie auf. Dies resultiert daraus, dass der zur herzustellenden Verzahnung konjugierte Körper typischerweise kein Zylinder ist. Der konjugierte Körper ist derjenige (gedachte) Körper, der in der Achskonfiguration der Wälzschälbearbeitung, für welche das Wälzschälwerkzeug bestimmt ist, bei Drehung um die Werkzeugachse und bei Drehung des Werkstücks um die Werkstückachse an jedem Punkt mit der (herzustellenden) Verzahnung wälzen würde. Die versetzten Schneidkanten können daher in ihrem Verlauf entsprechend angepasst werden, um die Verzahnung mit den gewünschten geometrischen Eigenschaften herzustellen.

Die Geometrie der Schneidkanten kann jeweils als ein Schnitt des zur herzustellenden Verzahnung konjugierten Körpers mit einer erzeugenden Geometrie der jeweiligen Schneidkante angesehen bzw. definiert werden. Im einfachsten Fall ist die erzeugende Geometrie eine Ebene. Alternativ kann die erzeugende Geometrie beispielsweise eine Kugelfläche sein. Auch andere erzeugende Geometrien sind denkbar. Um die versetzten Schneidkanten zu definieren, kann eine gleichartige erzeugende Geometrie in Richtung der Werkzeugachse verschoben und dann mit dem konjugierten Körper geschnitten werden.

Vorzugsweise wird das Wälzschälwerkzeug bei einem unten beschriebenen, erfindungsgemäßen Bearbeitungsverfahren eingesetzt. In den Rahmen der vorliegenden Erfindung fällt auch eine Verwendung eines erfindungsgemäßen Wälzschälwerkzeugs zum Bearbeiten von Zahnflanken einer Verzahnung, insbesondere in einem erfindungsgemäßen Bearbeitungsverfahren.

Das Wälzschälwerkzeug kann weitere Schneidkanten aufweisen, die der Bearbeitung von den (ersten) Zahnflanken an einer jeweiligen Zahnlücke gegenüberliegenden weiteren Zahnflanken dienen. Insbesondere während des Eingriffs einer der (ersten) Schneidkanten an einer der ersten Zahnflanken, kann die zugehörige weitere Schneidkante an der weiteren Zahnflanke in Eingriff gelangen.

Auch für wenigstens zwei der weiteren Schneidkanten gilt vorzugsweise, dass für wenigstens einen radialen Abstand von der Werkzeugachse ein entlang der Werkzeugachse gemessener Abstand der entsprechenden Punkte auf den in unterschiedlichen axialen Höhen angeordneten weiteren Schneidkanten wenigstens 5 µm, insbesondere wenigstens 10 µm, bevorzugt wenigstens 20 µm, besonders bevorzugt wenigstens 30 µm, und höchstens 0,5 mm, insbesondere höchstens 0,3 mm, bevorzugt höchstens 0,2 mm, besonders bevorzugt höchstens 0,15 mm beträgt. Typischerweise gelangt bei der Bearbeitung jeweils zunächst eine (erste) Schneidkante in Eingriff mit einer (ersten) Zahnflanke; während die erste Schneidkante Material von der ersten Zahnflanke abträgt, kann auch die weitere Schneidkante in Eingriff mit der an der Zahnlücke gegenüberliegenden weiteren Zahnflanke gelangen. Die weiteren Schneidkanten können wie die (ersten) Schneidkanten relativ zueinander angeordnet und entsprechend gestaltet sein.

Das Wälzschälwerkzeug kann zur Bearbeitung von geradverzahnten oder schrägverzahnten Werkstücken vorgesehen sein. Das Wälzschälwerkzeug kann zylindrisch oder konisch sein.

Bei einer bevorzugten Ausführungsform sind die auf unterschiedlichen axialen Höhen angeordneten Schneidkanten zueinander parallel versetzt. Die versetzten Schneidkanten verlaufen in diesem Fall in unabhängig vom Abstand von der Werkzeugachse im selben (entlang der Werkzeugachse gemessenen) Abstand zueinander. Dies kann die Auslegung und Herstellung des Wälzschälwerkzeugs vereinfachen.

Bei einer alternativen Ausführungsform sind die auf unterschiedlichen axialen Höhen angeordneten Schneidkanten gegeneinander geneigt. Die versetzten Schneidkanten weisen in diesem Fall mit zunehmendem Abstand von der Werkzeugachse einen zunehmenden oder abnehmenden - entlang der Werkzeugachse gemessen - Abstand zueinander auf. In einem bestimmten Abstand von der Werkzeugachse kann der Abstand verschwinden; im Übrigen verlaufen die Schneidkanten jedoch auf unterschiedlichen axialen Höhen bezüglich der Werkzeugachse. Dies bewirkt variable Abstände zweier durch die Schneidkanten erzeugter Vorschubmarkierungen. Benachbarte Vorschubmarkierungen verlaufen mit anderen Worten aufeinander zu bzw. voneinander weg. Die Vorschubmarkierungen können sich ggf. kreuzen. Eine mit diesem Wälzschälwerkzeug hergestellte Verzahnung zeigt ein ganz besonders ruhiges Abrollverhalten.

Eine vorteilhafte Ausführungsformen des Wälzschälwerkzeugs ist dadurch gekennzeichnet, dass die auf unterschiedlichen axialen Höhen angeordneten Schneidkanten jeweils in einer Ebene verlaufen. Die Schneidkanten verlaufen in ihrer jeweiligen Ebene in der Regel (eindimensional) gekrümmt. Dies kann die Auslegung und Herstellung des Wälzschälwerkzeugs vereinfachen.

Bei einer alternativen Ausführungsform ist vorgesehen, dass die auf unterschiedlichen axialen Höhen angeordneten Schneidkanten zweidimensional gekrümmt verlaufen. Derart kann insbesondere ein Hohlschliff eingerichtet sein. Dadurch kann die Spanbildung vorteilhaft beeinflusst werden.

Eine bevorzugte Weiterbildung dieser Ausführungsform ist dadurch gekennzeichnet, dass die auf unterschiedlichen axialen Höhen angeordneten Schneidkanten bei Projektion auf eine jeweilige, um das Winkelinkrement zwischen den Schneidkanten gedrehte, die Werkzeugachse enthaltende Ebene unterschiedlich gekrümmt verlaufen. Dadurch können variable Abstände zwischen den Vorschubmarkierungen zweier Schneidkanten erreicht werden. Benachbarte Vorschubmarkierungen verlaufen mit anderen Worten aufeinander zu bzw. voneinander weg. Die Vorschubmarkierungen können sich ggf. kreuzen. Zudem ermöglicht der unterschiedlich gekrümmte Verlauf der Schneidkanten eine Anpassung an den konjugierten Körper. Die jeweilige Ebene zur Projektion kann durch einen bestimmten Punkt, beispielsweise einen radial innersten, äußersten oder mittleren Punkt, der jeweiligen Schneidkante verlaufen.

Es kann vorgesehen sein, dass die auf unterschiedlichen axialen Höhen angeordneten Schneidkanten bei Projektion auf eine zur Werkzeugachse senkrechte Ebene unterschiedlich gekrümmt verlaufen. Dadurch kann die Form der hergestellten Verzahnung beeinflusst werden. Insbesondere kann erreicht werden, dass die auf unterschiedlichen Höhen angeordneten Schneidkanten jeweils dasselbe Profil der Verzahnung erzeugen. Mit anderen Worten ermöglicht die unterschiedlich verlaufende Projektion der Schneidkanten eine Anpassung an den konjugierten Körper.

Bei einer bevorzugten Ausführungsform sind alle Schneidkanten des Wälzschälwerkzeugs auf unterschiedlichen Höhen entlang der Werkzeugachse angeordnet. Mit anderen Worten besitzen alle Schneidkante eine jeweils individuelle Axialposition. Dadurch kann ein besonders breites Muster von im Abstand variierenden Vorschubmarkierungen auf der Zahnflanke erzeugt werden.

Eine alternative Ausführungsform ist dadurch gekennzeichnet, dass die Schneidkanten des Wälzschälwerkzeugs in mehrere Gruppen unterteilt sind, wobei korrespondierende Schneidkanten unterschiedlicher Gruppen jeweils auf derselben Höhe entlang der Werkzeugachse angeordnet sind. Dies kann die Auslegung und Herstellung des Wälzschälwerkzeugs vereinfachen. Diese Ausführungsform ist insbesondere nützlich, wenn eine jeweilige Zahnflanke nur durch die Schneidkanten einer der Gruppen bearbeitet wird. An der jeweiligen Zahnflanke wird ein sich wiederholendes Muster einer Anzahl von Vorschubmarkierungen erzeugt, entsprechend der Anzahl der Schneidkanten pro Gruppe.

Vorzugsweise sind alle Schneidkanten einer jeweiligen Gruppe auf unterschiedlichen Höhen entlang der Werkzeugachse angeordnet. Mit anderen Worten besitzen alle Schneidkante einer der Gruppen eine jeweils individuelle Axialposition. Dadurch können besonders breite Muster von im Abstand variierenden Vorschubmarkierungen auf der Zahnflanke erzeugt werden.

Eine vorteilhafte Ausführungsform ist dadurch gekennzeichnet, dass wenigstens drei der Schneidkanten zur Bearbeitung derselben Zahnflanke auf unterschiedlichen Höhen entlang der Werkzeugachse angeordnet sind, wobei die zweite Schneidkante in einer ersten Richtung entlang der Werkzeugachse auf einer anderen Höhe gegenüber der ersten Schneidkante angeordnet ist und wobei die dritte Schneidkante in einer zweiten Richtung entgegen der ersten Richtung gegenüber der zweiten Schneidkante, und vorzugsweise auch gegenüber der ersten Schneidkante in der zweiten Richtung, auf einer anderen Höhe angeordnet ist. Als erste, zweite, dritte usw. Schneidkante werden die Schneidkanten bezeichnet, die bei der Bearbeitung nacheinander als erste, zweite, dritte usw. mit einer jeweiligen Zahnflanke in Eingriff gelangen. Mit anderen Worten greifen die erste, zweite, dritte usw. Schneidkante in eine jeweilige Zahnlücke unmittelbar nacheinander ein und tragen Material von der angrenzenden Zahnflanke ab. Mit diesem Wälzschälwerkzeug werden Vorschubmarkierungen erzeugt, deren Abstände über die Breite der Zahnflanke abwechselnd zu- und abnehmen. Dies hat sich im Hinblick auf das Abrollverhalten und die Geräuschentwicklung als besonders vorteilhaft erwiesen.

Es kann vorgesehen sein, dass in axialer Richtung gegeneinander verschobene Schneidkanten in radialer Richtung zu der Werkzeugachse gegeneinander versetzt sind. Insbesondere weisen radial äußere Spitzen der jeweiligen Schneidkanten unterschiedliche Abstände von der Werkzeugachse auf. Im Übrigen können sich die Schneidkanten in ihrem räumlichen Verlauf entsprechen. Dies ermöglicht eine einfache Anpassung an den konjugierten Körper.

In axialer Richtung gegeneinander verschobene Schneidkanten können in Umfangsrichtung eine andere Teilung aufweisen als auf gleicher Höhe angeordnete Schneidkanten. Auch derart kann eine Anpassung an den konjugierten Körper erfolgen. Durch die unterschiedliche Teilung kann einem aufgrund des axialen Versatzes zeitlich nach vorne oder hinten verschobenen Eingriff der jeweiligen Schneidkante Rechnung getragen werden; der zeitliche Versatz korrespondiert mit einer geänderten Drehstellung des Wälzschälwerkzeugs gegenüber einem Wälzschälwerkzeug mit nicht in axialer Richtung versetzten Schneidkanten (Winkelversatz beim Eingriff). Dieser Winkelversatz kann gegengleich auf die Schneidkanten übertragen sein. Eine unterschiedliche Teilung bei in axialer Richtung versetzten Schneidkanten ist insbesondere bei Wälzschälwerkzeugen zur Bearbeitung von Schrägverzahnungen nützlich.

### Erfindungsgemäßes Bearbeitungsverfahren

In den Rahmen der Erfindung fällt auch ein Verfahren zum Bearbeiten von Zahnflanken einer Verzahnung eines Werkstücks durch Wälzschälen, indem ein Wälzschälwerkzeug in Eingriff mit der Verzahnung gebracht wird, wobei das Wälzschälwerkzeug um eine Werkzeugachse gedreht wird und das Werkstück um eine windschief zu der Werkzeugachse verlaufende Werkstückachse gedreht wird, und wobei das Wälzschälwerkzeug und das Werkstück mit einer Vorschubbewegung mit einer Komponente entlang der Werkstückachse relativ zueinander verschoben werden. Das Wälzschälwerkzeug ist vorzugsweise ein oben beschriebenes, erfindungsgemäßes Wälzschälwerkzeug. Die Vorschubbewegung weist aufgrund der Achskinematik auch eine Komponente entlang der Werkzeugachse auf. Typischerweise erfolgt die Vorschubbewegung parallel zu der Werkstückachse. Die Geschwindigkeit der Vorschubbewegung ist typischerweise konstant. Ein Achskreuzwinkel zwischen der Werkzeugachse und der Werkstückachse kann wenigstens 5°, bevorzugt wenigstens 10°, besonders bevorzugt wenigstens 15°, und/oder höchstens 50°, bevorzugt höchstens 40°, besonders bevorzugt höchstens 30°, betragen.

Das erfindungsgemäße Bearbeitungsverfahren ist dadurch gekennzeichnet, dass wenigstens zwei der Schneidkanten des Wälzschälwerkzeugs, die (insbesondere unmittelbar) nacheinander dieselbe Zahnflanke bearbeiten, in unterschiedlichen Höhen entlang der Werkzeugachse angeordnet sind, wobei für wenigstens einen radialen Abstand von der Werkzeugachse ein entlang der Werkzeugachse gemessener Abstand der entsprechenden Punkte auf den in unterschiedlichen axialen Höhen angeordneten Schneidkanten wenigstens 5 %, insbesondere wenigstens 10 %, und höchstens 95 %, insbesondere höchstens 90 %, des Vorschubweges der Vorschubbewegung beträgt, um welchen das Wälzschälwerkzeug und das Werkstück entlang der Werkstückachse zwischen der Bearbeitung derselben Zahnflanke mit den jeweiligen in unterschiedlichen axialen Höhen angeordneten Schneidkanten gegeneinander bewegt werden. Der Vorschubweg zwischen zwei unmittelbar aufeinanderfolgenden Schneidkanteneingriffen an derselben Zahnflanke kann beispielsweise zwischen 50 µm und 150 µm betragen.

Aufgrund des Versatzes der nacheinander an derselben Zahnflanke angreifenden Schneidkanten variieren die Abstände der erzeugten Vorschubmarkierungen. Bei einem Versatz der nachfolgenden Schneidkante in Vorschubrichtung wird der Abstand der Vorschubmarkierungen vergrößert; bei einem Versatz der nachfolgen Schneidkante entgegen der Vorschubrichtung wird der Abstand der Vorschubmarkierungen verkleinert. In eine jeweilige Zahnlücke mit der zu bearbeitenden Zahnflanke greifen die versetzten Schneidkanten in der Regel unmittelbar nacheinander ein. Mit anderen Worten erfolgt die Bearbeitung derart, dass an einer jeweiligen Zahnflanke gegeneinander axial versetzte Schneidkanten unmittelbar nacheinander Material abtragen. Am Wälzschälwerkzeug sind die gegeneinander versetzten Schneidkanten typischerweise nicht unmittelbar benachbart angeordnet; vielmehr können je nach Schneidenfolge (in Abhängigkeit der Zähnezahlen von Werkstück und Wälzschälwerkzeug) eine oder mehrere Schneidkanten am Wälzschälwerkzeug zwischen unmittelbar nacheinander an derselben Zahnflanke angreifenden Schneidkanten liegen.

Durch die in unterschiedlichen, vorzugsweise unregelmäßigen, Abständen angeordneten Vorschubmarkierungen wird einerseits das Abrollverhalten der Verzahnung verbessert. Insbesondere wird das Geräusch- bzw. Schwingungsverhalten verbessert, indem eine diskrete Frequenzanregung vermieden wird, und stattdessen ein breiteres Frequenzspektrum mit niedrigerer Amplitude angeregt wird. Andererseits wird ein ruhigerer und stabilerer Ablauf des Bearbeitungsverfahrens erhalten, da die Eingriffsstöße der Schneidkanten in unterschiedlichen Zeitabständen erfolgen. Insbesondere werden aus den schwankenden Schneidkräften resultierende Schwingungen mit negativen Auswirkungen auf den Bearbeitungsvorgang verringert.

Zwischen der Bearbeitung derselben Zahnflanke mit den aufeinanderfolgenden, versetzten Schneidkanten wird das Werkstück typischerweise um genau eine Umdrehung gedreht. Das Wälzschälwerkzeug kann dabei mehr (bei einer zu bearbeitenden Innen- oder Außenverzahnung möglich) oder weniger (nur bei einer zu bearbeitenden Außenverzahnung möglich) als eine Umdrehung durchführen. Typischerweise führt das Wälzschälwerkzeug zwischen der Bearbeitung derselben Zahnflanke keine ganzen Umdrehungen durch, sodass eine andere Schneidkante, insbesondere eine der axial versetzten Schneidkanten, an der jeweiligen Zahnflanke Material abträgt.

Die Bearbeitung mit dem Wälzschälwerkzeug mit auf unterschiedlichen axialen Höhen angeordneten Schneidkanten kann in einem Herstellverfahren die letzte materialabtragende, insbesondere die letzte spanabhebende Bearbeitung der Zahnflanken der Verzahnung sein. Die Bearbeitung mit dem Wälzschälwerkzeug mit auf unterschiedlichen axialen Höhen angeordneten Schneidkanten kann insbesondere die letzte Bearbeitung der Zahnflanken der Verzahnung sein. Alternativ kann anschließend an die Bearbeitung mit dem Wälzschälwerkzeug mit auf unterschiedlichen axialen Höhen angeordneten Schneidkanten eine chemische, physikalische und/oder thermische Oberflächenbearbeitung, beispielsweise ein Härten, erfolgen, wobei die geometrische Struktur der Oberfläche der Zahnflanken typischerweise nicht verändert wird.

Bei einer bevorzugten Verfahrensvariante ist die Bearbeitung mit dem Wälzschälwerkzeug mit auf unterschiedlichen axialen Höhen angeordneten Schneidkanten eine Hartfeinbearbeitung, die nach einem Härten der Verzahnung durchgeführt wird. Die Bearbeitungsspuren dieser Hartfeinbearbeitung bleiben am fertigen Werkstück erhalten, sodass die Vorteile des erfindungsgemäßen Verfahrens im Einsatz der hergestellten Verzahnung besonders deutlich zu Tage treten.

Typischerweise wird vor dem Härten eine Weichbearbeitung der Verzahnung durchgeführt. Die Weichbearbeitung kann beispielsweise durch Wälzfräsen, Hobeln, Stoßen oder vorzugsweise Wälzschälen erfolgen. Auch die Weichbearbeitung kann mit dem erfindungsgemäßen Verfahren und/oder einem erfindungsgemäßen Wälzschälwerkzeug durchgeführt werden. Insofern betrifft die Erfindung auch ein Herstellverfahren umfassend eine Weichbearbeitung, ein Härten und eine Hartfeinbearbeitung, wobei die Weichbearbeitung und/oder die Hartfeinbearbeitung mit dem erfindungsgemäßen Verfahren erfolgen können.

Bei einer alternativen, vorteilhaften Verfahrensvariante ist die Bearbeitung mit dem Wälzschälwerkzeug mit auf unterschiedlichen axialen Höhen angeordneten Schneidkanten eine Weichbearbeitung, an welche sich keine weitere materialabtragende, insbesondere keine weitere spanabhebende, Bearbeitung der Zahnflanken anschließt. Die bei der Weichbearbeitung erzeugte Oberflächenstruktur an den Zahnflanken bleibt somit am fertigen Werkstück erhalten. Bei einer Weichbearbeitung kann die Standzeit des Wälzschälwerkzeugs gegenüber einer Hartbearbeitung erhöht sein. Im Anschluss an die Weichbearbeitung mit dem Wälzschälwerkzeug mit auf unterschiedlichen axialen Höhen angeordneten Schneidkanten kann eine chemische, physikalische und/oder thermische Oberflächenbearbeitung, insbesondere ein Härten, erfolgen. Beispielsweise können die Zahnflanken oder das ganze Werkstück nitriert werden. Insofern betrifft die Erfindung auch ein Herstellverfahren umfassend eine Weichbearbeitung, die mit dem erfindungsgemäßen Verfahren erfolgt, und eine anschließende nichtabtragende Oberflächenbearbeitung, insbesondere ein Härten, der Zahnflanken, wobei das Herstellverfahren keine materialabtragende Hartbearbeitung nach der nichtabtragenden Oberflächenbearbeitung umfasst. Bei dieser Variante wird grundsätzlich ein Härteverfahren, beispielsweise Nitrieren, angewandt, das nur einen geringen Verzug verursacht, sodass auf eine korrigierende Nachbearbeitung verzichtet werden kann.

Bei einer bevorzugten Verfahrensvariante werden auf der Zahnflanke durch die in unterschiedlichen axialen Höhen angeordneten Schneidkanten aufeinanderfolgende Bearbeitungsspuren verursacht, deren Abstände in einer Breitenrichtung der Verzahnung in einem wiederholten Muster zunehmen und abnehmen. Eine jeweilige Zahnflanke wird hierzu mehrfach mit denselben oder in derselben Weise versetzten Schneidkanten bearbeitet. Das Muster kann beispielsweise wenigstens 5, bevorzugt wenigstens 10, besonders bevorzugt wenigstens 20, aufeinanderfolgende Bearbeitungsspuren (Vorschubmarkierungen) umfassen. Innerhalb des Musters können die Abstände der Bearbeitungsspuren sich kontinuierlich vergrößern und verkleinern oder alternativ mehrfach, insbesondere in unregelmäßiger Weise, zu- und abnehmen. Eine Verfahrensführung, die ein wiederholtes Muster verursacht, kann die Auslegung und Herstellung des Wälzschälwerkzeugs vereinfachen. Zudem hat sich gezeigt, dass bei hinreichender Breite des Musters die erfindungsgemäßen Vorteile sowohl im Hinblick auf den Einsatz der Verzahnung als auch auf die Durchführung des Bearbeitungsverfahrens bereits weitgehend ausgeschöpft werden können, sodass eine größere Anzahl von Bearbeitungsspuren im Muster nur noch eine vergleichsweise geringe weitere Verbesserung bewirkt.

Weitere Merkmale und Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: eine Wälzschälbearbeitung einer Verzahnung mit den relevanten Bewegungsachsen, in einer schematischen Darstellung;
- Fig. 2: die Verzahnung von Figur 1 und einen zu der Verzahnung konjugierten Körper, in einer schematischen Darstellung;
- Fig. 3: ein Wälzschälwerkzeug nach dem Stand der Technik, in einer schematischen Perspektivansicht;
- Fig. 4: einen Schneidzahn eines Wälzschälwerkzeugs in einer vergrößerten schematischen Perspektivansicht;
- Fig. 5: eine schematische Darstellung der Positionen von Schneidkanten entlang der Werkzeugachse bei einem Wälzschälwerkzeug nach dem Stand der Technik;
- Fig. 6: eine schematische Darstellung der Eingriffsfolge von Schneidkanten an einer Zahnflanke beim Wälzschälen nach dem Stand der Technik;
- Fig. 7: eine schematische Darstellung von Bearbeitungsspuren auf einer Zahnflanke beim Wälzschälen nach dem Stand der Technik;
- Fig. 8: ein erfindungsgemäßes Wälzschälwerkzeug mit entlang der Werkzeugachse stochastisch versetzten Schneidkanten, in einer schematischen Perspektivansicht;
- Fig. 9: eine schematische Darstellung der Positionen von nacheinander an einer Zahnflanke angreifenden Schneidkanten relativ zu einer Nominalposition entlang der Werkzeugachse bei einem Wälzschälwerkzeug von Figur 8;
- Fig. 10: eine schematische Darstellung der Eingriffsfolge von Schneidkanten an einer Zahnflanke beim Wälzschälen gemäß der Erfindung, beispielsweise mit dem Wälzschälwerkzeug von Figur 8;
- Fig. 11: eine schematische Darstellung von Bearbeitungsspuren auf einer Zahnflanke beim Wälzschälen gemäß der Erfindung, beispielsweise mit dem Wälzschälwerkzeug von Figur 8;
- Fig. 12: eine Kontur eines Schneidzahns eines erfindungsgemäßen Wälzschälwerkzeugs, wobei sich Schneidkanten in einer zur Werkzeugachse senkrechten Ebene erstrecken;
- Fig. 13a: eine Kontur eines Schneidzahns eines erfindungsgemäßen Wälzschälwerkzeugs, wobei sich Schneidkanten in gegenüber der Werkzeugachse geneigten Ebene erstrecken;
- Fig. 13b: eine Kontur eines Schneidzahns eines erfindungsgemäßen Wälzschälwerkzeugs, wobei sich Schneidkanten zweidimensional gekrümmt aus einer zur Werkzeugachse senkrechten Ebene heraus erstrecken;
- Fig. 14: ein erfindungsgemäßes Wälzschälwerkzeug mit mehreren Gruppen von entlang der Werkzeugachse versetzten Schneidkanten, in einer schematischen Perspektivansicht;
- Fig. 15: eine schematische Darstellung der Positionen von nacheinander an einer Zahnflanke angreifenden Schneidkanten, die in von Gruppen stochastisch versetzt sind, dargestellt relativ zu einer Nominalposition entlang der Werkzeugachse bei einem erfindungsgemäßen Wälzschälwerkzeug;
- Fig. 16: eine schematische Darstellung der Positionen von nacheinander an einer Zahnflanke angreifenden Schneidkanten, die in von Gruppen regelmäßig versetzt sind, dargestellt relativ zu einer Nominalposition entlang der Werkzeugachse bei einem erfindungsgemäßen Wälzschälwerkzeug;
- Fig. 17: eine schematische Darstellung von Bearbeitungsspuren auf einer Zahnflanke beim Wälzschälen gemäß der Erfindung, wobei sich Abstände zweier benachbarter Bearbeitungsspuren über der Zahnhöhe verändern;
- Fig. 18: eine schematische Darstellung von sich kreuzenden Bearbeitungsspuren auf einer Zahnflanke beim Wälzschälen gemäß der Erfindung.

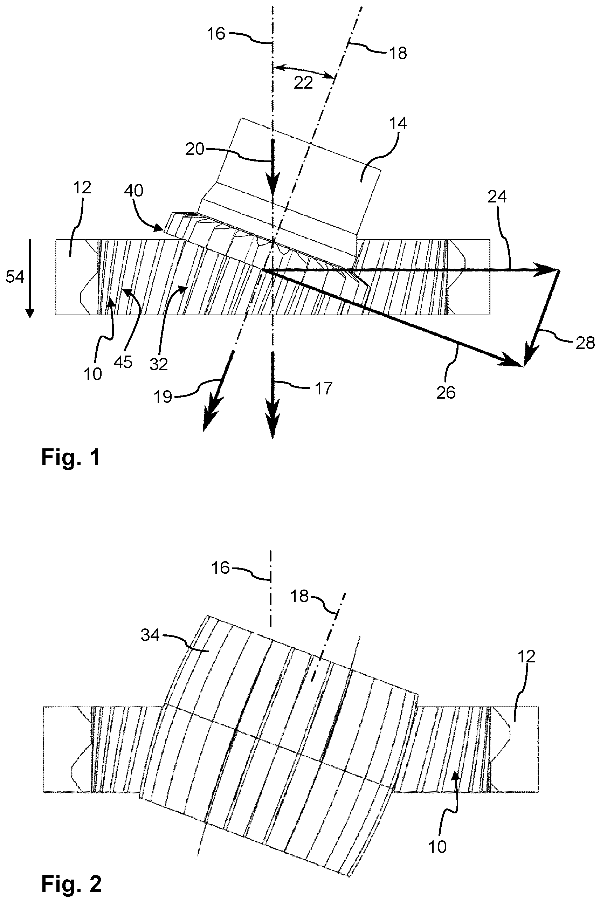

**Figur 1** zeigt eine Darstellung der Kinematik einer Wälzschälbearbeitung einer Verzahnung **10** eines Werkstücks **12** mit einem Wälzschälwerkzeug **14.** Das Werkstück 12 ist hier beispielhaft innenverzahnt. Die Wälzschälbearbeitung eines außenverzahnten Werkstücks erfolgt grundsätzlich mit denselben Bewegungen. Die in Figur 1 dargestellte Kinematik gilt gleichermaßen für eine aus dem Stand der Technik bekannte Wälzschälbearbeitung wie auch für erfindungsgemäße Wälzschälbearbeitungen mit erfindungsgemäßen Wälzschälwerkzeugen.

Zum Wälzschälen wird das verzahnte Wälzschälwerkzeug 14 in Eingriff mit der zu bearbeitenden Verzahnung 10 gebracht. Das Werkstück 12 mit der Verzahnung 10 wird um eine Werkstückachse **16** gedreht, wie durch einen Doppelpfeil **17** angedeutet ist. Zugleich wird das Wälzschälwerkzeug 14 um eine Werkzeugachse **18** gedreht, wie durch einen Doppelpfeil **19** angedeutet ist. Die jeweiligen Drehgeschwindigkeiten sind aufeinander abgestimmt. Während der gekoppelten Drehbewegung wird eine Vorschubbewegung **20** ausgeführt, die typischerweise entlang der Werkstückachse 16 verläuft.

Die Werkstückachse 16 und die Werkzeugachse 18 verlaufen windschief zueinander. Bei Projektion auf eine zum Gemeinlot der Achsen 16, 18 senkrechte Ebene ist ein Achskreuzwinkel **22** eingerichtet, der beispielsweise zwischen 10° und 45° liegen kann. Typischerweise verlaufen die Achsen 16, 18 parallel zu der zum Gemeinlot senkrechten Ebene; optional können aber auch die Achsen 16, 18 zueinander hin bzw. voneinander weg geneigt sein, sodass ein Neigungswinkel eingerichtet ist (nicht näher dargestellt).

Die aus den Drehungen des Werkstücks 12 und des Wälzschälwerkzeugs 14 resultierenden Umfangsgeschwindigkeiten in der Kontaktzone sind mit einem Pfeil **24** für das Werkstück 12 und einem Pfeil **26** für das Wälzschälwerkzeug 14 dargestellt. Aus der vektoriellen Differenz dieser Umfangsgeschwindigkeiten 24, 26 resultiert eine Schnittgeschwindigkeit **28.** Die Vorschubgeschwindigkeit der Vorschubbewegung 20 ist für die Schnittgeschwindigkeit in der Regel vernachlässigbar. Die Vorschubbewegung 20 bewirkt, dass die Bearbeitung bei aufeinanderfolgenden Eingriffen von Schneidkanten **40** in Breitenrichtung **54** der Verzahnung entlang der Zahnflanken **32** fortschreitet.

Bei der Wälzschälbearbeitung kann die Verzahnung 10 aus einem unverzahnten Werkstück herausgearbeitet werden. Ebenso ist es möglich, ein vorverzahntes Werkstück 12 durch Wälzschälen nachzubearbeiten. Die Wälzschälbearbeitung kann dabei insbesondere erfolgen, nachdem das vorverzahnte Werkstück 12 gehärtet wurde.

Zur Festlegung der Form der Schneidkanten 40 des Wälzschälwerkzeugs 14 kann auf den sogenannten konjugierten Körper **34** der herzustellenden Verzahnung 10 Bezug genommen werden, vergleiche **Figur 2****.** Der konjugierte Körper 34 ist ein gedachter Körper, der dadurch definiert ist, dass er in der Achskonfiguration der durchzuführenden Wälzschälbearbeitung, bei Drehung um die Werkzeugachse 18 und bei Drehung des Werkstücks 12 um die Werkstückachse 16 an jedem Punkt mit der (herzustellenden) Verzahnung 10 wälzen würde. Die Schneidkanten 40 können als Schnittlinien des konjugierten Körpers 34 mit einer erzeugenden Geometrie, beispielsweise einer Ebene oder einer Kugel, definiert werden.

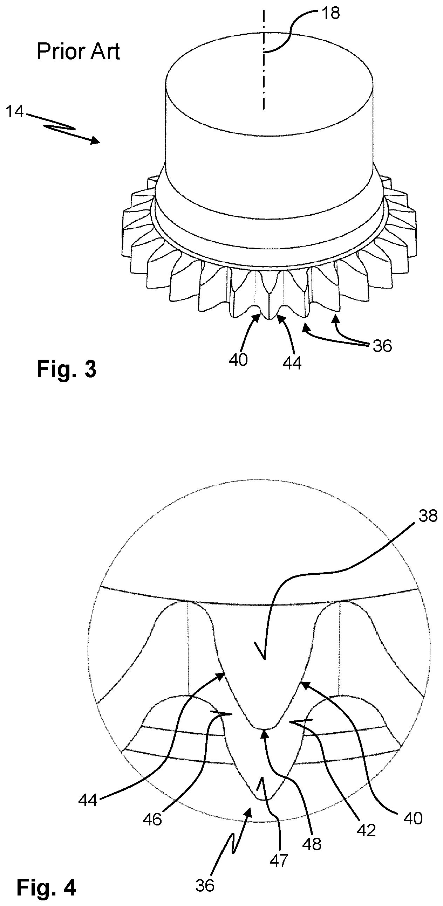

Bei Wälzschälwerkzeugen 14 aus dem Stand der Technik sind alle Schneidkanten auf gleichen Höhen entlang der Werkzeugachse 18 angeordnet. Die erzeugende Geometrie kann im einfachsten Fall für alle Zähne des Wälzschälwerkzeugs 14 dieselbe zur Werkzeugachse 18 senkrechte Ebene sein. Ein solches aus dem Stand der Technik bekanntes Wälzschälwerkzeug 14 ist in **Figur 3** dargestellt.

In **Figur 4** ist ein Schneidzahn **36** eines Wälzschälwerkzeugs vergrößert dargestellt. Die nachfolgenden Erläuterungen der Struktur des Schneidzahns 36 gelten für erfindungsgemäße wie auch für aus dem Stand der Technik bekannte Wälzschälwerkzeuge gleichermaßen.

Stirnseitig an dem Schneidzahn ist eine Spanfläche **38** ausgebildet. Eine (erste) Schneidkante **40** grenzt die Spanfläche 38 von einer (ersten) Freifläche **42** ab. Bei der Wälzschälbearbeitung trägt die Schneidkante 40 Material von ersten Zahnflanken 32 der Verzahnung 10 ab. Eine weitere Schneidkante **44** dient der Bearbeitung der an einer Zahnlücke der Verzahnung 10 jeweils gegenüberliegenden weiteren Zahnflanken **45** (vergleiche Figur 1). Die weitere Schneidkante 44 grenzt die Spanfläche 38 von einer weiteren Freifläche **46** ab. Am Kopf des Schneidzahns 36 kann angrenzend an eine Kopffreifläche **47** eine Kopfschneidkante **48** zur Bearbeitung des Fußbereichs der Verzahnung 10 ausgebildet sein. Zwischen den Schneidkanten 40, 44, 48 und der Spanfläche 38 kann jeweils eine Spanflächenfase eingerichtet sein (nicht näher dargestellt). Zwischen den Schneidkanten 40, 44, 48 und den jeweiligen Freiflächen 42, 46, 47 kann je eine Freiflächenfase eingerichtet sein (nicht näher dargestellt).

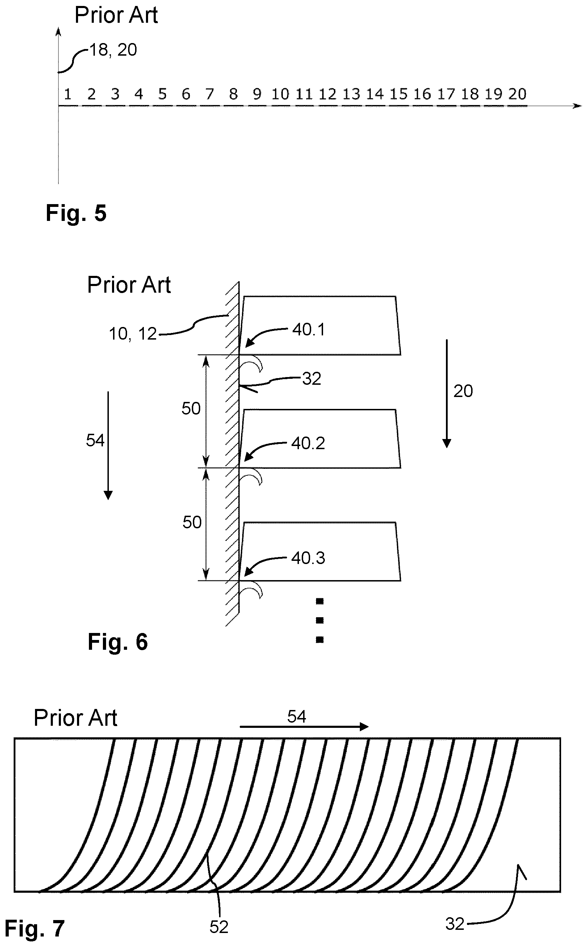

Bei aus dem Stand der Technik bekannten Wälzschälwerkzeugen 14 sind - wie bereits erläutert - die Schneidkanten 40 auf gleichen Höhen entlang der Werkzeugachse 18 angeordnet; dies ist in **Figur 5** für die an einer Zahnflanke 32 nacheinander angreifenden Schneidkanten 40 dargestellt, wobei die Zahnflanke 32 hier beispielhaft von 20 Schneidkanten 40 nacheinander bearbeitet wird. Bei dem Wälzschälwerkzeug 14 mit auf gleicher Höhe angeordneten Schneidkanten 40 kommen diese Schneidkanten 40 (hier beispielhaft eine erste Schneidkante **40.1,** eine zweite Schneidkante **40.2** und eine dritte Schneidkante **40.3**) jeweils in gleichen Abständen **50** mit der zu bearbeitenden Zahnflanke 32 in Eingriff, vergleiche **Figur 6****.** Entsprechend verlaufen Bearbeitungsspuren (Vorschubmarkierungen) **52** in gleichen Abständen über die Zahnflanke 32, vergleiche **Figur 7****.** Benachbarte Bearbeitungsspuren 52 sind in Breitenrichtung 54 parallel verschoben. Für die übrigen Zahnflanken der Verzahnung 10 ergeben sich entsprechende Bearbeitungsspuren. Daraus resultiert im Betrieb der hergestellten Verzahnung 10 drehzahlabhängig eine Anregung mit einer einzigen (diskreten) Frequenz.

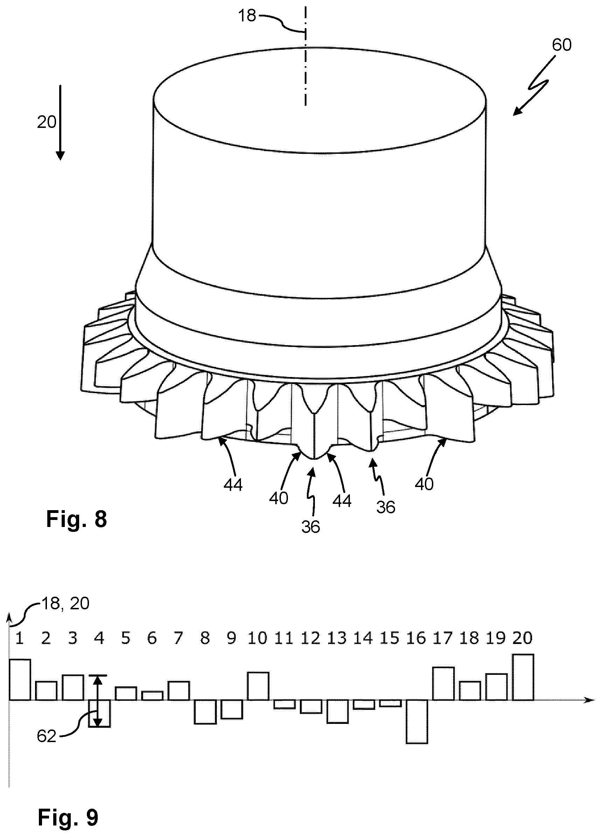

**Figur 8** zeigt ein erfindungsgemäßes Wälzschälwerkzeug **60** in einer ersten Ausführungsform. Bei dem Wälzschälwerkzeug 60 sind die Schneidkanten 40 (und die weiteren Schneidkanten 44) entlang der Werkzeugachse 18 gegeneinander versetzt. In **Figur 9** ist der axiale Versatz von hier beispielhaft 20 Schneidkanten 40 dargestellt, die an einer der zu bearbeitenden Zahnflanken 32 nacheinander Material abtragen. Am Wälzschälwerkzeug 60 sind die Schneidkanten 40, die unmittelbar nacheinander an derselben Zahnflanke 32 angreifen, typischerweise nicht direkt zueinander benachbart (aufgrund des jeweiligen Verhältnisses der Zähnezahlen von Wälzschälwerkzeug 60 und Werkstück 12).

Einige der Schneidkanten 40 sind in Richtung der Vorschubbewegung 20 entlang der Werkzeugachse 18 (Ordinate in Figur 9) gegenüber einer Nominallage (auf Höhe der Abszisse) in Richtung der Vorschubbewegung 20 nach vorne versetzt, einige der Schneidkanten 40 sind entgegen der Richtung der Vorschubbewegung 20 nach hinten versetzt. Der Höhenversatz **62** zwischen denjenigen Schneidkanten 40, die nacheinander an der betrachteten Zahnflanke 32 angreifen, kann beispielsweise zwischen 10 µm und 80 µm betragen. In Figur 9 ist der Höhenversatz 62 beispielhaft zwischen der vierten und fünften Schneidkante 40, die an der betrachteten Zahnflanke 32 angreifen, eingezeichnet, und kann im dargestellten Ausführungsbeispiel 60 µm betragen. Für die anderen Paare nacheinander angreifender Schneidkanten 40 ergeben sich andere Werte des Höhenversatzes 62 im genannten Bereich.

In Figur 9 ist ferner zu erkennen, dass für einige der nacheinander an der Zahnflanke 32 angreifenden Schneidkanten 40 die Richtung des Versatzes in Bezug auf die jeweils vorher eingreifende Schneidkante 40 wechselt. Beispielsweise ist die dritte Schneidkante weiter in Richtung der Vorschubbewegung 20 gegenüber einer Nominallage versetzt als die zweite Schneidkante. Demgegenüber ist die vierte Schneidkante entgegen der Richtung der Vorschubbewegung 20 gegenüber der dritten und auch der zweiten Schneidkante versetzt. Entsprechendes gilt auch für die als sechstes, siebtes und achtes angreifenden Schneidkanten und mit umgekehrten Vorzeichen für die zwölfte, dreizehnte und vierzehnte Schneidkante oder die fünfzehnte, sechzehnte und siebzehnte Schneidkante. Derart können besonders unregelmäßige Abstände der Bearbeitungsspuren erhalten werden.

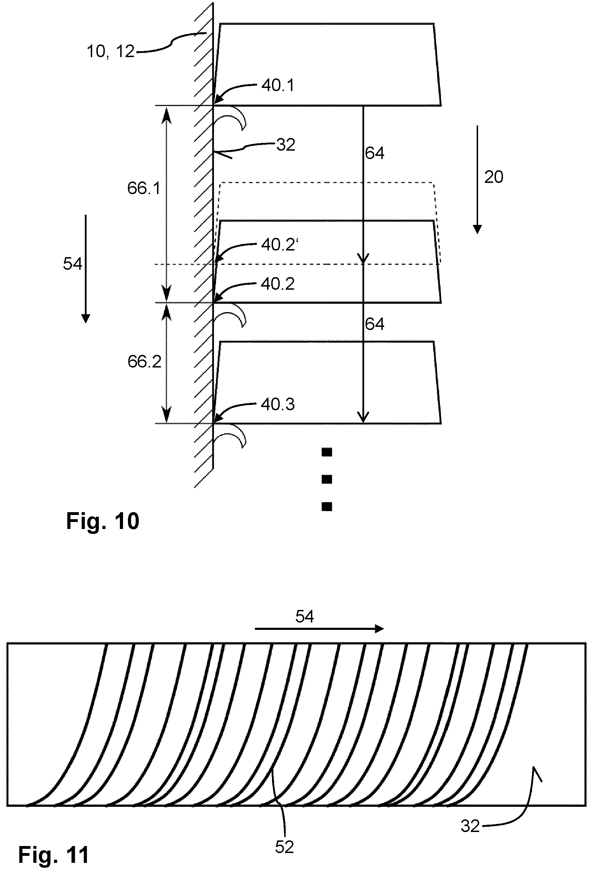

In **Figur 10** ist schematisch dargestellt, wie die Schneidkanten 40 (hier beispielhaft eine erste Schneidkante 40.1, eine zweite Schneidkante 40.2 und eine dritte Schneidkante 40.3) beim erfindungsgemäßen Wälzschälen, beispielsweise mit dem Wälzschälwerkzeug 60, nacheinander an der betrachteten Zahnflanke 32 in Eingriff kommen. In Figur 10 ist die Axialposition der ersten Schneidkante 40.1 entlang der Werkzeugachse 18 als Bezugspunkt gewählt. Zur Orientierung ist gestrichelt die Eingriffssituation dargestellt, wie sie sich bei einem Wälzschälwerkzeug 14 mit auf gleicher Höhe angeordneten Schneidkanten ergeben würde (die auf Höhe der ersten Schneidkante 40.1 angeordnete, gedachte zweite Schneidkante ist mit **40.2'** bezeichnet). Ein Abstand zwischen der Schneidkante 40.1 und der gedachten Schneidkante 40.2' entspricht somit dem Vorschubweg **64** zwischen zwei aufeinanderfolgenden Schneidkanteneingriffen an derselben Zahnflanke 32.

Im dargestellten Beispiel ist die zweite Schneidkante 40.2 in Richtung der Vorschubbewegung 20 entlang der Werkzeugachse 18 nach vorne versetzt. Ein in Breitenrichtung 54 der Zahnflanke 32 gemessener erster Abstand **66.1** zwischen Eingriffspunkten der ersten Schneidkante 40.1 und der zweiten Schneidkante 40.2 ist somit größer als der Vorschubweg 64. Wenn die dritte Schneidkante 40.3 - wie es in Figur 10 dargestellt ist - entlang der Werkzeugachse 18 auf Höhe der ersten Schneidkante 40.1 angeordnet ist, ist ein zweiter Abstand **66.2** zwischen Eingriffspunkten der zweiten Schneidkante 40.2 und der dritten Schneidkante 40.3 kleiner als der Vorschubweg 64 und als der erste Abstand 66.1.

Der Vorschubweg 64 zwischen zwei Schneidkanteneingriffen an der betrachteten Zahnflanke 32 kann beispielsweise 100 µm betragen. Der Höhenversatz 62 beträgt in diesem Ausführungsbeispiel somit zwischen 10 % und 80 % des Vorschubwegs 64.

Bei dem Wälzschälwerkzeug 60 sind die Schneidkanten 40 stochastisch entlang der Werkzeugachse 18 versetzt. Insbesondere können alle Schneidkanten 40 auf unterschiedlichen Höhen entlang der Werkzeugachse 18 angeordnet sein. Eine entsprechende Folge von Bearbeitungsspuren auf der Zahnflanke 32 ist in **Figur 11** dargestellt.

Wenn die Schneidkanten 40 zueinander parallel versetzt sind, sind benachbarte Bearbeitungsspuren 52 in Breitenrichtung 54 parallel verschoben. Abstände zwischen benachbarten Bearbeitungsspuren 52 unterscheiden sich jedoch entsprechend des Höhenversatzes zwischen den Schneidkanten 40, durch welche sie erzeugt wurden.

Für die übrigen Zahnflanken der Verzahnung 10 ergeben sich entsprechende Bearbeitungsspuren. Daraus resultiert im Betrieb der hergestellten Verzahnung 10 drehzahlabhängig eine Anregung mit einem Frequenzspektrum einer gewissen Breite.

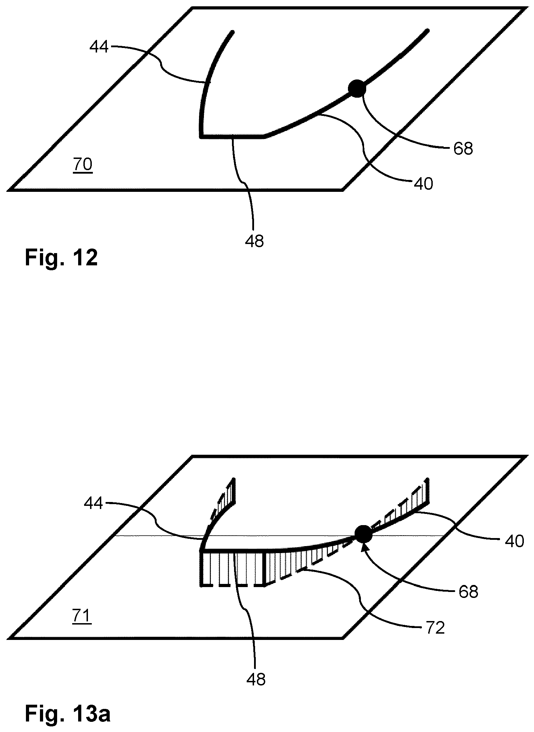

Der Höhenversatz 62 zwischen den Schneidkanten 40 kann in einem ausgewählten radialen Abstand von der Werkzeugachse 18 gemessen werden. Insbesondere kann auf einen jeweiligen Linienmittelpunkt **68** der Schneidkanten 40 abgestellt werden, welcher die jeweilige Schneidkante 40 in zwei gleich lange Schneidkantenabschnitte unterteilt, vergleiche **Figur 12****.**

In Figur 12 ist ferner gezeigt, dass sich eine jeweilige Schneidkante 40 (und auch die zugehörige weitere Schneidkante 44 sowie ggf. die Kopfschneidkante 48) in einer Ebene **70** erstrecken kann. Die Schneidkante 40 verläuft dabei grundsätzlich gekrümmt in dieser Ebene 70. Die Ebene 70 entspricht der erzeugenden Geometrie durch deren Schnitt mit dem konjugierten Körper 34 (vergleiche Figur 2) die Schneidkante 40 definiert ist.

Die Ebene 70 kann senkrecht zur Werkzeugachse 18 ausgerichtet sein. Insbesondere können die Schneidkanten 40 parallel zueinander versetzt in parallelen Ebenen 70 verlaufen.

Es ist aber auch denkbar, dass die Ebene 70, in welcher sich eine der Schneidkanten 40 erstreckt, gegenüber der Werkzeugsachse 18 geneigt ist. Insbesondere können für Schneidkanten 40 auf unterschiedlichen Höhen unterschiedliche Neigungen ihrer jeweiligen Ebene 70 eingerichtet sein.

So ist in **Figur 13a** beispielhaft eine Schneidkante 40 (und auch die zugehörige weitere Schneidkante 44 sowie ggf. die Kopfschneidkante 48) dargestellt, die sich in einer Ebene erstreckt, welche gegenüber einer zur Werkzeugachse 18 senkrechten Ebene **71** geneigt ist. Die erzeugende Geometrie ist in diesem Fall eine gegen die Werkzeugachse 18 geneigte Ebene.

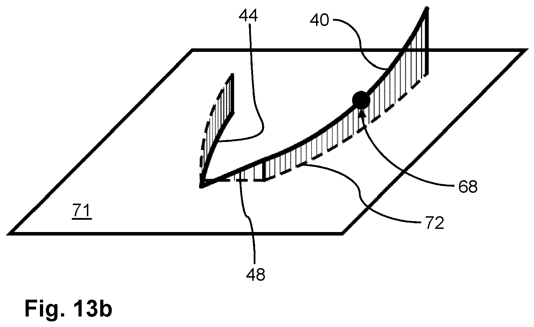

In **Figur 13b** ist dargestellt, dass sich eine jeweilige Schneidkante 40 (und auch die zugehörige weitere Schneidkante 44 sowie ggf. die Kopfschneidkante 48) zweidimensional gekrümmt im Raum erstrecken können; sie verlaufen mithin nicht in einer Ebene. Die erzeugende Geometrie ist in diesem Fall eine gekrümmte Fläche im Raum.

Zur Bestimmung des Höhenversatzes 62 kann auch bei den in den Figuren 13a, 13b dargestellten Verläufen der Schneidkanten 40 auf einen bestimmten radialen Abstand von der Werkzeugachse 18 abgestellt werden. Ebenso kann der Höhenversatz 62 für die jeweiligen Linienmittelpunkte 68 bestimmt werden.

Verläufe von Projektionen **72** der Schneidkanten 40 auf die zur Werkzeugachse 18 senkrechte Ebene 71 können sich für die versetzten Schneidkanten 40 unterscheiden.

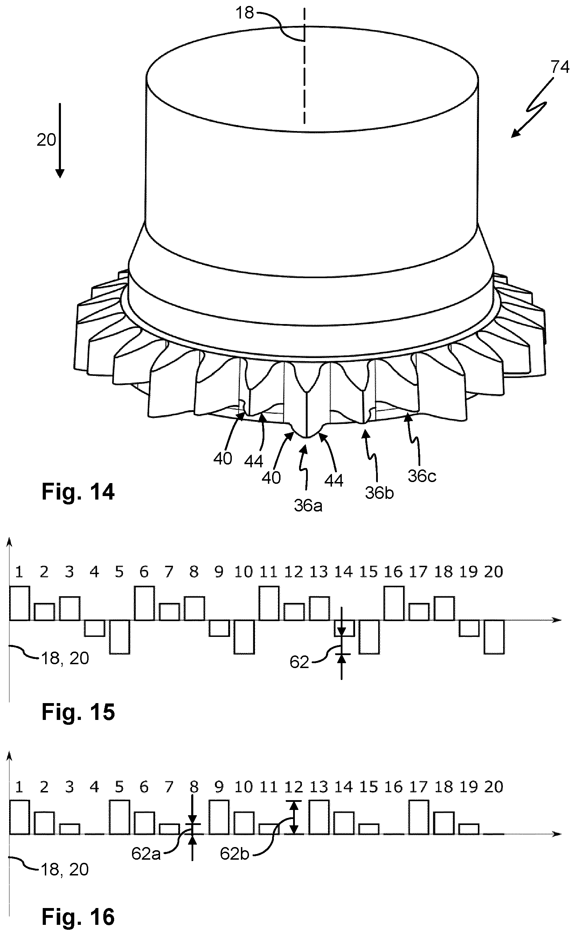

**Figur 14** zeigt ein erfindungsgemäßes Wälzschälwerkzeug **74,** bei welchem die Schneidkanten 40 in Gruppen unterteilt sind. Hier umfasst jede Gruppe beispielhaft drei auf unterschiedlichen Höhen entlang der Werkzeugachse 18 angeordnete Schneidzähne **36a, 36b, 36c** mit jeweils einer Schneidkante 40 und einer weiteren Schneidkante 44. Im dargestellten Ausführungsbeispiel verlaufen alle Schneidkanten 40, 44 einer jeweiligen Gruppe auf unterschiedlichen Höhen bezüglich der Werkzeugachse 18. Korrespondierende Schneidkanten 40, 44 der Schneidzähne 36a, 36b, 36c unterschiedlicher Gruppen befinden sich jeweils auf derselben axialen Höhe.

In **Figur 15** ist der axiale Versatz von hier beispielhaft 20 Schneidkanten 40 dargestellt, die an einer der zu bearbeitenden Zahnflanken 32 nacheinander Material abtragen. Die Schneidkanten 40 sind in Gruppen von hier je fünf Schneidkanten 40 untereilt. Innerhalb einer Gruppe variieren die Axialposition der Schneidkanten 40 und der Höhenversatz 62 zwischen nacheinander eingreifenden Schneidkanten 40 zufällig, jedoch in allen Gruppen in derselben Weise.

**Figur 16** zeigt den axialen Versatz von wiederum beispielhaft 20 Schneidkanten 40 die in Gruppen von hier je vier Schneidkanten 40 unterteilt sind. Innerhalb einer jeden Gruppe sind bei der Bearbeitung einer der Zahnflanken 32 einander nachfolgende Schneidkanten 40 gleichmäßig in einer Richtung gegenüber der jeweils vorhergehenden Schneidkante 40 versetzt. Hier nimmt der Versatz der Schneidkanten 40 in Richtung der Vorschubbewegung 20 in gleichmäßigen Schritten ab. Ein Höhenversatz **62a** zwischen nacheinander an einer der Zahnflanken 32 angreifenden Schneidkanten 40 ist innerhalb der Gruppen jeweils gleich groß. Beim Wechsel von einer letzten Schneidkante 40 einer der Gruppen auf die erste Schneidkante 40 der nächsten Gruppe ergibt sich entsprechend ein größerer Höhenversatz **62b** in Richtung der Vorschubbewegung 20.

Mit Wälzschälwerkzeugen, deren Schneidkanten entsprechend den Figuren 15 oder 16 versetzt sind, werden bei der Bearbeitung wiederholte Muster von Bearbeitungsspuren auf einer Zahnflanke erzeugt (nicht näher dargestellt). Innerhalb der Mustersequenzen nehmen die Abstände zwischen benachbarten Bearbeitungsspuren jeweils in derselben Weise zu und ab.

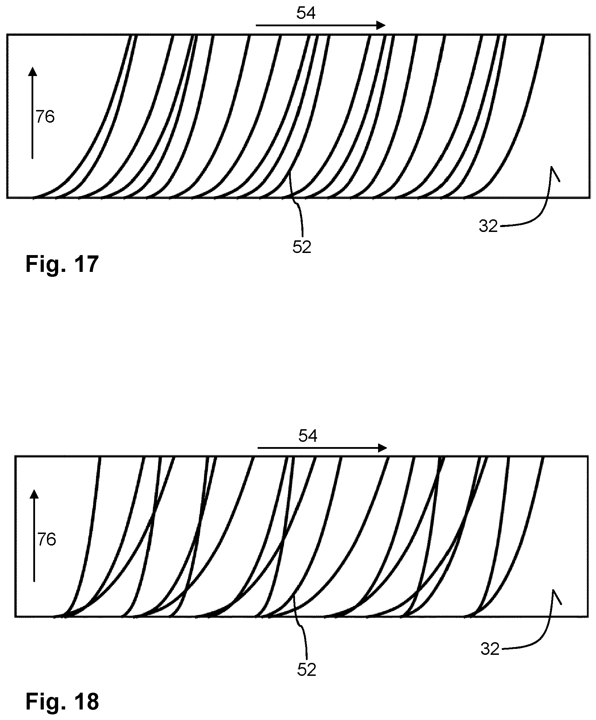

**Figur 17** zeigt Bearbeitungsspuren 52, die bei der erfindungsgemäßen Bearbeitung einer Zahnflanke 32 mit gegeneinander geneigten Schneidkanten 40 erzeugt werden können. Aufgrund der unterschiedlichen Neigung unterscheidet sich die axiale Position nacheinander angreifender Schneidkanten, für praktisch alle radialen Abstände von der Werkzeugachse 18; nur für einen einzigen radialen Abstand können nacheinander angreifende Schneidkanten dieselbe axiale Position besitzen.

Bei der Wälzschälbearbeitung wandert die Kontaktzone von Werkstück 10 und Wälzschälwerkzeug entlang der in Eingriff befindlichen Schneidkante. Wenn die Schneidkante gegenüber einer zur Werkzeugachse 18 senkrechten Ebene 70 geneigt ist, verlaufen die Bearbeitungsspuren 52 in Höhenrichtung **76** der bearbeiteten Zahnflanke 32 daher je nach Neigung der Schneidkante steiler oder flacher. Benachbarte Bearbeitungsspuren nähern sich daher in ihrem Verlauf einander an oder entfernen sich voneinander. Dies bewirkt, dass im Betrieb der hergestellten Verzahnung die Anregung durch die unvermeidbare Welligkeit der Zahnflanke 32 keine diskrete Frequenz, sondern ein breiteres Frequenzspektrum anregt.

**Figur 18** zeigt Bearbeitungsspuren 52, die bei der erfindungsgemäßen Bearbeitung einer Zahnflanke 32 mit gegeneinander geneigten und zusätzlich in axialer Richtung verschobenen Schneidkanten 40 erzeugt werden können. Die Bearbeitungsspuren 52 kreuzen sich teilweise.

Zusammenfassend betrifft die Erfindung das Bearbeiten von Verzahnungen durch Wälzschälen, wobei Bearbeitungsspuren mit ungleichen Abständen und ggf. unterschiedlichen Verlaufsrichtungen erzeugt werden. Hierzu erstrecken sich zumindest einige Schneidkanten eines Wälzschälwerkzeugs zumindest teilweise in unterschiedlichen Höhen entlang einer Werkzeugachse des Wälzschälwerkzeugs. Bei der Bearbeitung greifen an einer Zahnflanke nacheinander Schneidkanten an, die auf unterschiedlichen axialen Höhen bezüglich der Werkstückachse angeordnet sind. Der Eingriff der Schneidkanten erfolgt somit in unterschiedlichen Zeitintervallen und in unterschiedlichen Abständen in Breitenrichtung der Zahnflanke. Rückwirkungen des Schneidkanteneingriffs auf den Bearbeitungsvorgang und Anregungen von Schwingungen im Einsatz der hergestellten Verzahnung besitzen daher ein Frequenzspektrum einer größeren Breite und niedrigerer Amplitude als es bei zeitlich und räumlich äquidistanten Schneidkanteneingriffen der Fall wäre. Insbesondere kann sich die unregelmäßigere Oberflächenstruktur der hergestellten Verzahnung positiv auf das Geräuschanregungsverhalten bei einem Eingriff der Verzahnung mit einer Gegenverzahnung auswirken.

### Bezugszeichenliste

Verzahnung **10**
Werkstück **12**
Wälzschälwerkzeug **14**
Werkstückachse **16**
Doppelpfeil **17**
Werkzeugachse **18**
Doppelpfeil **19**
Vorschubbewegung **20**
Achskreuzwinkel **22**
Umfangsgeschwindigkeit **24** (für das Werkstück 12)
Umfangsgeschwindigkeit **26** (für das Wälzschälwerkzeug 14)
Schnittgeschwindigkeit **28**
Zahnflanke **32**
konjugierter Körper **34**
Schneidzahn **36; 36a, 36b, 36c**
Spanfläche **38**
Schneidkante **40; 40.1, 40.2, 40.3**
Virtuelle Schneidkante **40.2'**
Freifläche **42**
weitere Schneidkante **44**
weitere Zahnflanke **45**
weitere Freifläche **46**
Kopffreifläche **47**
Kopfschneidkante **48**
Abstand **50**
Bearbeitungsspuren **52**
Breitenrichtung **54**
Wälzschälwerkzeug **60**
Höhenversatz **62; 62a, 62b**
Vorschubweg **64**
Abstand **66.1, 66.2**
Linienmittelpunkt **68**
Ebene **70** der Schneidkante
Zur Werkzeugachse orthogonale Ebene **71**
Projektion **72**
Wälzschälwerkzeug **74**

## Patentansprüche

1. Wälzschälwerkzeug (60; 74) zum Bearbeiten von Zahnflanken (32) einer Verzahnung (10) eines Werkstücks (12), indem das Wälzschälwerkzeug (60; 74) um eine Werkzeugachse (18) gedreht wird und das Werkstück (12) um eine windschief zu der Werkzeugachse (18) verlaufende Werkstückachse (16) gedreht wird, wobei das Wälzschälwerkzeug (60; 74) und das Werkstück (12) mit einer Vorschubbewegung (20) mit einer Komponente entlang der Werkstückachse (16) relativ zueinander verschoben werden,
und wobei das Wälzschälwerkzeug (60; 74) mehrere Schneidkanten (40; 40.1, 40.2, 40.3) aufweist, die beim Bearbeiten des Werkstücks (12) nacheinander an derselben Zahnflanke (32) Material abtragen,
**dadurch gekennzeichnet,**
**dass** wenigstens zwei der Schneidkanten (40; 40.1, 40.2, 40.3) zur Bearbeitung derselben Zahnflanke (32) in unterschiedlichen Höhen entlang der Werkzeugachse (18) angeordnet sind, wobei für wenigstens einen radialen Abstand von der Werkzeugachse (18) ein entlang der Werkzeugachse (18) gemessener Abstand der entsprechenden Punkte auf den in unterschiedlichen axialen Höhen angeordneten Schneidkanten (40; 40.1, 40.2, 40.3) wenigstens 5 µm, insbesondere wenigstens 10 µm, und höchstens 0,5 mm, insbesondere höchstens 0,3 mm beträgt.

2. Wälzschälwerkzeug (60; 74) nach Anspruch 1, **dadurch gekennzeichnet, dass** die auf unterschiedlichen axialen Höhen angeordneten Schneidkanten (40; 40.1, 40.2, 40.3) zueinander parallel versetzt sind.

3. Wälzschälwerkzeug (60; 74) nach Anspruch 1, **dadurch gekennzeichnet, dass** die auf unterschiedlichen axialen Höhen angeordneten Schneidkanten (40; 40.1, 40.2, 40.3) gegeneinander geneigt sind.

4. Wälzschälwerkzeug (60; 74) nach einem der Ansprüche 1 bis 3, **dadurch gekennzeichnet, dass** die auf unterschiedlichen axialen Höhen angeordneten Schneidkanten (40; 40.1, 40.2, 40.3) jeweils in einer Ebene (70) verlaufen.

5. Wälzschälwerkzeug (60; 74) nach einem der Ansprüche 1 bis 3, **dadurch gekennzeichnet, dass** die auf unterschiedlichen axialen Höhen angeordneten Schneidkanten (40; 40.1, 40.2, 40.3) zweidimensional gekrümmt verlaufen.

6. Wälzschälwerkzeug (60; 74) nach Anspruch 5, **dadurch gekennzeichnet, dass** die auf unterschiedlichen axialen Höhen angeordneten Schneidkanten (40; 40.1, 40.2, 40.3) bei Projektion auf eine jeweilige, um das Winkelinkrement zwischen den Schneidkanten (40; 40.1, 40.2, 40.3) gedrehte, die Werkzeugachse (18) enthaltende Ebene unterschiedlich gekrümmt verlaufen.

7. Wälzschälwerkzeug (60; 74) nach einem der vorhergehenden Ansprüche, **dadurch gekennzeichnet, dass** die auf unterschiedlichen axialen Höhen angeordneten Schneidkanten (40; 40.1, 40.2, 40.3) bei Projektion auf eine zur Werkzeugachse (18) senkrechte Ebene (70) unterschiedlich gekrümmt verlaufen.

8. Wälzschälwerkzeug (60) nach einem der Ansprüche 1 bis 7, **dadurch gekennzeichnet, dass** alle Schneidkanten (40; 40.1, 40.2, 40.3) des Wälzschälwerkzeugs (60) auf unterschiedlichen Höhen entlang der Werkzeugachse (18) angeordnet sind.

9. Wälzschälwerkzeug (74) nach einem der Ansprüche 1 bis 7, **dadurch gekennzeichnet, dass** die Schneidkanten (40; 40.1, 40.2, 40.3) des Wälzschälwerkzeugs (74) in mehrere Gruppen unterteilt sind, wobei korrespondierende Schneidkanten (40; 40.1, 40.2, 40.3) unterschiedlicher Gruppen jeweils auf derselben Höhe entlang der Werkzeugachse (18) angeordnet sind.

10. Wälzschälwerkzeug (74) nach Anspruch 9, **dadurch gekennzeichnet, dass** alle Schneidkanten (40; 40.1, 40.2, 40.3) einer jeweiligen Gruppe auf unterschiedlichen Höhen entlang der Werkzeugachse (18) angeordnet sind.

11. Wälzschälwerkzeug (60; 74) nach einem der vorhergehenden Ansprüche, **dadurch gekennzeichnet, dass** die jeweiligen Linienmittelpunkte (68) der auf unterschiedlichen axialen Höhen angeordneten Schneidkanten (40; 40.1, 40.2, 40.3) entlang der Werkzeugachse (18) um wenigstens 5 µm, bevorzugt wenigstens 10 µm, und/oder höchstens 0,5 mm, bevorzugt höchstens 0,3 mm, zueinander verschoben sind.

12. Wälzschälwerkzeug (60; 74) nach einem der vorhergehenden Ansprüche, **dadurch gekennzeichnet, dass** wenigstens drei der Schneidkanten (40; 40.1, 40.2, 40.3) zur Bearbeitung derselben Zahnflanke (32) auf unterschiedlichen Höhen entlang der Werkzeugachse (18) angeordnet sind, wobei die zweite Schneidkante (40; 40.1, 40.2, 40.3) in einer ersten Richtung entlang der Werkzeugachse (18) auf einer anderen Höhe gegenüber der ersten Schneidkante (40; 40.1, 40.2, 40.3) angeordnet ist und wobei die dritte Schneidkante (40; 40.1, 40.2, 40.3) in einer zweiten Richtung entgegen der ersten Richtung gegenüber der zweiten Schneidkante (40; 40.1, 40.2, 40.3), und vorzugsweise auch gegenüber der ersten Schneidkante (40; 40.1, 40.2, 40.3) in der zweiten Richtung, auf einer anderen Höhe angeordnet ist.

13. Wälzschälwerkzeug (60; 74) nach einem der vorhergehenden Ansprüche, **dadurch gekennzeichnet, dass** in axialer Richtung gegeneinander verschobene Schneidkanten (40; 40.1, 40.2, 40.3) in radialer Richtung zu der Werkzeugachse (18) gegeneinander versetzt sind.

14. Wälzschälwerkzeug (60; 74) nach einem der vorhergehenden Ansprüche, **dadurch gekennzeichnet, dass** in axialer Richtung gegeneinander verschobene Schneidkanten (40; 40.1, 40.2, 40.3) in Umfangsrichtung eine andere Teilung aufweisen als auf gleicher Höhe angeordnete Schneidkanten (40; 40.1, 40.2, 40.3).

15. Verfahren zum Bearbeiten von Zahnflanken (32) einer Verzahnung (10) eines Werkstücks (12) durch Wälzschälen, indem ein Wälzschälwerkzeug (60; 74), insbesondere ein Wälzschälwerkzeug (60; 74) nach einem der vorhergehenden Ansprüche, in Eingriff mit der Verzahnung (10) gebracht wird,
wobei das Wälzschälwerkzeug (60; 74) um eine Werkzeugachse (18) gedreht wird und das Werkstück (12) um eine windschief zu der Werkzeugachse (18) verlaufende Werkstückachse (16) gedreht wird,
und wobei das Wälzschälwerkzeug (60; 74) und das Werkstück (12) mit einer Vorschubbewegung (20) mit einer Komponente entlang der Werkstückachse (16) relativ zueinander verschoben werden,
**dadurch gekennzeichnet,**
**dass** wenigstens zwei der Schneidkanten (40; 40.1, 40.2, 40.3) des Wälzschälwerkzeugs (60; 74), die nacheinander dieselbe Zahnflanke (32) bearbeiten, in unterschiedlichen Höhen entlang der Werkzeugachse (18) angeordnet sind, wobei für wenigstens einen radialen Abstand von der Werkzeugachse (18) ein entlang der Werkzeugachse (18) gemessener Abstand der entsprechenden Punkte auf den in unterschiedlichen axialen Höhen angeordneten Schneidkanten (40; 40.1, 40.2, 40.3) wenigstens 5 %, insbesondere wenigstens 10 %, und höchstens 95 %, insbesondere höchstens 90 %, des Vorschubweges (64) der Vorschubbewegung (20) beträgt, um welchen das Wälzschälwerkzeug (60; 74) und das Werkstück (12) entlang der Werkstückachse (16) zwischen der Bearbeitung derselben Zahnflanke (32) mit den jeweiligen in unterschiedlichen axialen Höhen angeordneten Schneidkanten (40; 40.1, 40.2, 40.3) gegeneinander bewegt werden.

16. Verfahren nach Anspruch 15, **dadurch gekennzeichnet, dass** die Bearbeitung mit dem Wälzschälwerkzeug (60; 74) mit auf unterschiedlichen axialen Höhen angeordneten Schneidkanten (40; 40.1, 40.2, 40.3) eine Hartfeinbearbeitung ist, die nach einem Härten der Verzahnung (10) durchgeführt wird.

17. Verfahren nach Anspruch 15, **dadurch gekennzeichnet, dass** die Bearbeitung mit dem Wälzschälwerkzeug (60; 74) mit auf unterschiedlichen axialen Höhen angeordneten Schneidkanten (40; 40.1, 40.2, 40.3) eine Weichbearbeitung ist, an welche sich keine weitere materialabtragende Bearbeitung der Zahnflanken (32) anschließt.

18. Verfahren nach einem der Ansprüche 15 bis 17, **dadurch gekennzeichnet, dass** auf der Zahnflanke (32) durch die in unterschiedlichen axialen Höhen angeordneten Schneidkanten (40; 40.1, 40.2, 40.3) aufeinanderfolgende Bearbeitungsspuren (52) verursacht werden, deren Abstände in einer Breitenrichtung (54) der Verzahnung (10) in einem wiederholten Muster zunehmen und abnehmen.

## Claims

1. A skiving tool (60; 74) for machining tooth flanks (32) of teeth (10) of a workpiece (12), in which the skiving tool (60; 74) is rotated about a tool axis (18) and the workpiece (12) is rotated about a workpiece axis (16) running skew to the tool axis (18), the skiving tool (60; 74) and the workpiece (12) being displaced relative to one another with a feed motion (20) with a component along the workpiece axis (16),
the skiving tool (60; 74) having a plurality of cutting edges (40; 40.1, 40.2, 40.3) which successively remove material from the same tooth flank (32) when machining the workpiece (12),
**characterized in that**
at least two of the cutting edges (40; 40.1, 40.2, 40.3) for machining the same tooth flank (32) are arranged at different heights along the tool axis (18), it being the case for at least one radial distance from the tool axis (18) that a distance measured along the tool axis (18) between the corresponding points on the cutting edges (40; 40.1, 40.2, 40.3) arranged at different axial heights is at least 5 µm, in particular at least 10 µm, and at most 0.5 mm, in particular at most 0.3 mm.

2. The skiving tool (60; 74) according to claim 1, **characterized in that** the cutting edges (40; 40.1, 40.2, 40.3) arranged at different axial heights are offset in parallel with one another.

3. The skiving tool (60; 74) according to claim 1, **characterized in that** the cutting edges (40; 40.1, 40.2, 40.3) arranged at different axial heights are inclined with respect to one another.

4. The skiving tool (60; 74) according to any one of claims 1 to 3, **characterized in that** the cutting edges (40; 40.1, 40.2, 40.3) arranged at different axial heights each extend in a plane (70).

5. The skiving tool (60; 74) according to any one of claims 1 to 3, **characterized in that** the cutting edges (40; 40.1, 40.2, 40.3) arranged at different axial heights have two-dimensional curvature.

6. The skiving tool (60; 74) according to claim 5, **characterized in that** the cutting edges (40; 40.1, 40.2, 40.3) arranged at different axial heights have different curvatures when projected onto a corresponding plane containing the tool axis (18), which plane is rotated by the angular increment between the cutting edges (40; 40.1, 40.2, 40.3).

7. The skiving tool (60; 74) according to any one of the preceding claims, **characterized in that** the cutting edges (40; 40.1, 40.2, 40.3) arranged at different axial heights have different curvatures when projected onto a plane (70) that is perpendicular to the tool axis (18).

8. The skiving tool (60) according to any one of claims 1 to 7, **characterized in that** all the cutting edges (40; 40.1, 40.2, 40.3) of the skiving tool (60) are arranged at different heights along the tool axis (18).

9. The skiving tool (74) according to any one of claims 1 to 7, **characterized in that** the cutting edges (40; 40.1, 40.2, 40.3) of the skiving tool (74) are divided into several groups, corresponding cutting edges (40; 40.1, 40.2, 40.3) of different groups each being arranged at the same height along the tool axis (18).

10. The skiving tool (74) according to claim 9, **characterized in that** all the cutting edges (40; 40.1, 40.2, 40.3) of each group are arranged at different heights along the tool axis (18).

11. The skiving tool (60; 74) according to any one of the preceding claims, **characterized in that** the line center (68) of each of the cutting edges (40; 40.1, 40.2, 40.3) arranged at different axial heights is shifted with respect to one another along the tool axis (18) by at least 5 µm, preferably at least 10 µm, and/or at most 0.5 mm, preferably at most 0.3 mm.

12. The skiving tool (60; 74) according to any one of the preceding claims, **characterized in that** at least three of the cutting edges (40; 40.1, 40.2, 40.3) for machining the same tooth flank (32) are arranged at different heights along the tool axis (18), the second cutting edge (40; 40.1, 40.2, 40.3) being arranged at a different height with respect to the first cutting edge (40; 40.1, 40.2, 40.3) in a first direction along the tool axis (18) and the third cutting edge (40; 40.1, 40.2, 40.3) being arranged at a different height with respect to the second cutting edge (40; 40.1, 40.2, 40.3) in a second direction that is opposite the first direction, and preferably also being arranged at a different height with respect to the first cutting edge (40; 40.1, 40.2, 40.3) in the second direction.

13. The skiving tool (60; 74) according to any one of the preceding claims, **characterized in that** cutting edges (40; 40.1, 40.2, 40.3) that are offset relative to one another in the axial direction are offset relative to one another in the radial direction with respect to the tool axis (18).

14. The skiving tool (60; 74) according to any one of the preceding claims, **characterized in that** cutting edges (40; 40.1, 40.2, 40.3) that are offset relative to one another in the axial direction have a different pitch in the circumferential direction than cutting edges (40; 40.1, 40.2, 40.3) arranged at the same height.

15. A method for machining tooth flanks (32) of teeth (10) of a workpiece (12) by skiving, in which a skiving tool (60; 74), in particular a skiving tool (60; 74) according to any one of the preceding claims, is brought into engagement with the teeth (10),
the skiving tool (60; 74) being rotated about a tool axis (18) and the workpiece (12) being rotated about a workpiece axis (16) running skew to the tool axis (18),
and the skiving tool (60; 74) and the workpiece (12) being displaced relative to one another with a feed motion (20) with a component along the workpiece axis (16),
**characterized in that**
that at least two of the cutting edges (40; 40.1, 40.2, 40.3) of the skiving tool (60; 74), which successively machine the same tooth flank (32), are arranged at different heights along the tool axis (18), it being the case that for at least one radial distance from the tool axis (18), a distance measured along the tool axis (18) between the corresponding points on the cutting edges (40; 40.1, 40.2, 40.3) arranged at different axial heights is at least 5%, in particular at least 10%, and at most 95%, in particular at most 90%, of the feed distance (64) of the feed motion (20) by which the skiving tool (60; 74) and the workpiece (12) are moved with respect to one another along the workpiece axis (16) between each of the cutting edges (40; 40.1, 40.2, 40.3) arranged at different axial heights machining the same tooth flank (32).

16. The method according to claim 15, **characterized in that** the machining process with the skiving tool (60; 74) having cutting edges (40; 40.1, 40.2, 40.3) arranged at different axial heights is a hard-fine machining process which is carried out after the teeth (10) have been hardened.

17. The method according to claim 15, **characterized in that** the machining process with the skiving tool (60; 74) having cutting edges (40; 40.1, 40.2, 40.3) arranged at different axial heights is a soft machining process, which is not followed by any further material-removing machining of the tooth flanks (32).

18. The method according to any one of claims 15 to 17, **characterized in that** successive machining marks (52) are caused on the tooth flank (32) by the cutting edges (40; 40.1, 40.2, 40.3) arranged at different axial heights, the distances between which marks increase and decrease in a width direction (54) of the teeth (10) in a repeated pattern.

## Revendications

1. Outil de taillage par développante (60 ; 74) permettant d'usiner des flancs de dent (32) d'une denture (10) d'une pièce à usiner (12) en faisant tourner l'outil de taillage par développante (60 ; 74) autour d'un axe d'outil (18) et en faisant tourner la pièce à usiner (12) autour d'un axe de pièce à usiner (16) s'étendant de manière gauchie par rapport à l'axe d'outil (18), l'outil de taillage par développante (60 ; 74) et la pièce à usiner (12) étant déplacés l'un par rapport à l'autre le long de l'axe de pièce à usiner (16) avec un mouvement d'avancée (20) présentant une composante,
et l'outil de taillage par développante (60 ; 74) présentant plusieurs arêtes de coupe (40 ; 40.1, 40.2, 40.3) qui, lors de l'usinage de la pièce à usiner (12), enlèvent successivement de la matière au niveau du même flanc de dent (32),
**caractérisé en ce que**
au moins deux des arêtes de coupe (40 ; 40.1, 40.2, 40.3) sont agencées à des hauteurs différentes le long de l'axe d'outil (18) en vue de l'usinage du même flanc de dent (32), un espacement mesuré le long de l'axe d'outil (18) entre les points correspondants sur les arêtes de coupe (40 ; 40.1, 40.2, 40.3) agencées à des hauteurs axiales différentes étant, pour au moins un espacement radial par rapport à l'axe d'outil (18), d'au moins 5 µm, en particulier d'au moins 10 µm, et d'au plus 0,5 mm, en particulier d'au plus 0,3 mm.

2. Outil de taillage par développante (60 ; 74) selon la revendication 1, **caractérisé en ce que** les arêtes de coupe (40 ; 40.1, 40.2, 40.3) agencées à des hauteurs axiales différentes sont décalées parallèlement les unes par rapport aux autres.

3. Outil de taillage par développante (60 ; 74) selon la revendication 1, **caractérisé en ce que** les arêtes de coupe (40 ; 40.1, 40.2, 40.3) agencées à des hauteurs axiales différentes sont inclinées les unes par rapport aux autres.

4. Outil de taillage par développante (60 ; 74) selon l'une quelconque des revendications 1 à 3, **caractérisé en ce que** les arêtes de coupe (40 ; 40.1, 40.2, 40.3) agencées à des hauteurs axiales différentes s'étendent respectivement dans un plan (70).

5. Outil de taillage par développante (60 ; 74) selon l'une quelconque des revendications 1 à 3, **caractérisé en ce que** les arêtes de coupe (40 ; 40.1, 40.2, 40.3) agencées à des hauteurs axiales différentes s'étendent de manière incurvée dans deux dimensions.

6. Outil de taillage par développante (60 ; 74) selon la revendication 5, **caractérisé en ce que** les arêtes de coupe (40 ; 40.1, 40.2, 40.3) agencées à des hauteurs axiales différentes s'étendent de manière différemment incurvée lorsqu'elles sont projetées sur un plan respectif contenant l'axe d'outil (18) et pivoté à raison de l'incrément angulaire entre les arêtes de coupe (40 ; 40.1, 40.2, 40.3).

7. Outil de taillage par développante (60 ; 74) selon l'une quelconque des revendications précédentes, **caractérisé en ce que** les arêtes de coupe (40 ; 40.1, 40.2, 40.3) agencées à des hauteurs axiales différentes s'étendent de manière différemment incurvée lorsqu'elles sont projetées sur un plan (70) perpendiculaire à l'axe d'outil (18).

8. Outil de taillage par développante (60) selon l'une quelconque des revendications 1 à 7, **caractérisé en ce que** toutes les arêtes de coupe (40 ; 40.1, 40.2, 40.3) de l'outil de taillage par développante (60) sont agencées à des hauteurs différentes le long de l'axe d'outil (18).

9. Outil de taillage par développante (74) selon l'une quelconque des revendications 1 à 7, **caractérisé en ce que** les arêtes de coupe (40 ; 40.1, 40.2, 40.3) de l'outil de taillage par développante (74) sont divisées en plusieurs groupes, les arêtes de coupe (40 ; 40.1, 40.2, 40.3) correspondantes de groupes différents étant agencées respectivement à la même hauteur le long de l'axe d'outil (18).

10. Outil de taillage par développante (74) selon la revendication 9, **caractérisé en ce que** toutes les arêtes de coupe (40 ; 40.1, 40.2, 40.3) d'un groupe respectif sont agencées à des hauteurs différentes le long de l'axe d'outil (18).

11. Outil de taillage par développante (60 ; 74) selon l'une quelconque des revendications précédentes, **caractérisé en ce que** les centres de ligne (68) respectifs des arêtes de coupe (40 ; 40.1, 40.2, 40.3) agencées à des hauteurs axiales différentes sont déplacés les uns par rapport aux autres le long de l'axe d'outil (18) d'au moins 5 µm, de manière préférée d'au moins 10 µm, et/ou d'au plus 0,5 mm, de manière préférée d'au plus 0,3 mm.

12. Outil de taillage par développante (60 ; 74) selon l'une quelconque des revendications précédentes, **caractérisé en ce qu'**au moins trois des arêtes de coupe (40 ; 40.1, 40.2, 40.3) sont agencées à des hauteurs différentes le long de l'axe d'outil (18) en vue de l'usinage du même flanc de dent (32), la deuxième arête de coupe (40 ; 40.1, 40.2, 40.3) étant agencée par rapport à la première arête de coupe (40 ; 40.1, 40.2, 40.3) à une autre hauteur dans une première direction le long de l'axe d'outil (18) et la troisième arête de coupe (40 ; 40.1, 40.2, 40.3) étant agencée par rapport à la deuxième arête de coupe (40 ; 40.1, 40.2, 40.3) à une autre hauteur dans une deuxième direction opposée à la première direction, et de manière préférée également par rapport à la première arête de coupe (40 ; 40.1, 40.2, 40.3) dans la deuxième direction.

13. Outil de taillage par développante (60 ; 74) selon l'une quelconque des revendications précédentes, **caractérisé en ce que** des arêtes de coupe (40 ; 40.1, 40.2, 40.3) déplacées les unes par rapport aux autres dans la direction axiale sont décalées les unes par rapport aux autres par rapport à l'axe d'outil (18) dans la direction radiale.

14. Outil de taillage par développante (60 ; 74) selon l'une quelconque des revendications précédentes, **caractérisé en ce que** les arêtes de coupe (40 ; 40.1, 40.2, 40.3) déplacées les unes par rapport aux autres dans la direction axiale présentent dans la direction circonférentielle une répartition différente de celle des arêtes de coupe (40 ; 40.1, 40.2, 40.3) agencées à la même hauteur.

15. Procédé d'usinage de flancs de dent (32) d'une denture (10) d'une pièce à usiner (12) par taillage par développante en mettant un outil de taillage par développante (60 ; 74), en particulier un outil de taillage par développante (60 ; 74) selon l'une quelconque des revendications précédentes, en prise avec la denture (10),
l'outil de taillage par développante (60 ; 74) étant pivoté autour d'un axe d'outil (18) et la pièce à usiner (12) étant pivotée autour d'un axe de pièce à usiner (16) s'étendant de manière gauchie par rapport à l'axe d'outil (18),
et l'outil de taillage par développante (60 ; 74) et la pièce à usiner (12) étant déplacés l'un par rapport à l'autre le long de l'axe de pièce à usiner (16) avec un mouvement d'avancée (20) présentant une composante,
**caractérisé en ce que**
au moins deux des arêtes de coupe (40 ; 40.1, 40.2, 40.3) de l'outil de taillage par développante (60 ; 74), qui usinent successivement le même flanc de dent (32), sont agencées à des hauteurs différentes le long de l'axe d'outil (18), un espacement mesuré le long de l'axe d'outil (18) entre les points correspondants sur les arêtes de coupe (40 ; 40.1, 40.2, 40.3) agencées à des hauteurs axiales différentes étant, pour au moins un espacement radial par rapport à l'axe d'outil (18), d'au moins 5 Wo, en particulier d'au moins 10 Wo, et d'au plus 95 Wo, en particulier d'au plus 90 Wo, du trajet d'avancée (64) du mouvement d'avancée (20), autour duquel l'outil de taillage par développante (60 ; 74) et la pièce à usiner (12) sont déplacés l'un par rapport à l'autre le long de l'axe de pièce à usiner (16) entre l'usinage du même flanc de dent (32) avec les arêtes de coupe (40 ; 40.1, 40.2, 40.3) respectives agencées à des hauteurs axiales différentes.

16. Procédé selon la revendication 15, **caractérisé en ce que** l'usinage avec l'outil de taillage par développante (60 ; 74) comprenant des arêtes de coupe (40 ; 40.1, 40.2, 40.3) agencées à des hauteurs axiales différentes est un usinage de finition dure qui est mis en œuvre après un trempage de la denture (10).

17. Procédé selon la revendication 15, **caractérisé en ce que** l'usinage avec l'outil de taillage par développante (60 ; 74) comprenant des arêtes de coupe (40 ; 40.1, 40.2, 40.3) agencées à des hauteurs axiales différentes est un usinage doux qui n'est lié à aucun autre usinage des flancs de dents (32) par enlèvement de matière.

18. Procédé selon l'une quelconque des revendications 15 à 17, **caractérisé en ce que** des pistes d'usinage (52) succédant les unes aux autres, et dont les espacements augmentent et diminuent selon un motif répété dans une direction de largeur (54) de la denture (10), sont générées sur le flanc de dent (32) grâce aux arêtes de coupe (40 ; 40.1, 40.2, 40.3) agencées à des hauteurs axiales différentes.
